(19) Europäisches Patentamt
European Patent Office
Office européen des brevets

(11) EP 2 163 583 A1

(12) **EUROPEAN PATENT APPLICATION**
published in accordance with Art. 153(4) EPC

(43) Date of publication:
**17.03.2010 Bulletin 2010/11**

(21) Application number: **08765406.7**

(22) Date of filing: **04.06.2008**

(51) Int Cl.:
***C08L 69/00*** *(2006.01)* ***C08G 64/02*** *(2006.01)*
***C08L 23/00*** *(2006.01)* ***C08L 25/10*** *(2006.01)*
***C08L 33/04*** *(2006.01)* ***C08L 67/04*** *(2006.01)*
***C08L 101/16*** *(2006.01)*

(86) International application number:
**PCT/JP2008/060626**

(87) International publication number:
**WO 2009/001670 (31.12.2008 Gazette 2009/01)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.06.2007 JP 2007149360**
**20.06.2007 JP 2007162630**
**22.06.2007 JP 2007164895**
**25.06.2007 JP 2007166192**
**11.07.2007 JP 2007181911**

(71) Applicant: **Teijin Limited**
**Osaka-shi, Osaka 541-0054 (JP)**

(72) Inventors:
- **ODA, Akimichi**
  **Iwakuni-shi**
  **Yamaguchi 740-0014 (JP)**
- **KITAZONO, Eiichi**
  **Iwakuni-shi**
  **Yamaguchi 740-0014 (JP)**

(74) Representative: **Hallybone, Huw George et al**
**Carpmaels & Ransford**
**43-45 Bloomsbury Square**
**London WC1A 2RA (GB)**

(54) **POLYCARBONATE RESIN COMPOSITION**

(57) A polycarbonate resin composition, which comprises a plant-derived component, has improved properties such as improved moldability, biodegradability, water-absorbing property, impact resistance, melt flow characteristics, density, transparency and the like, exhibits less environmental load and is excellent in recycling efficiency is disclosed. The polycarbonate resin composition of the present invention comprises 30 to 95 parts by weight of component A (a polycarbonate comprising a plant-derived component) and 5 to 70 parts by weight of component B (an acrylate resin, a biodegradable resin, an aromatic polyester, a polyolefin or a rubber-modified styrene resin) (provided that the total of the component A and the component B is 100 parts by weight).

EP 2 163 583 A1

## Description

Technical Field

The present invention relates to a polycarbonate resin composition and more specifically relates to a polycarbonate resin composition which comprises a plant-derived component, has improved properties such as improved moldability, biodegradability, water-absorbing property, impact resistance, melt flow characteristics, density, transparency and the like, exhibits less environmental load and is excellent in recycling efficiency.

Background Art

Polycarbonate resins exhibit excellent transparency, thermal resistance and impact resistance, and are widely used in industrial fields such as the optical media field, electric, electronic and office automation (OA) fields, automobile and industrial machine fields, medical field and the like. Generally used aromatic polycarbonates are produced from raw materials obtained from petroleum resources. Therefore, taking into consideration that petroleum resources depleted, and global warming due to carbon dioxide being generated by incinerating of waste, development of a material which has the same properties as those of aromatic polycarbonates, exhibits less environmental load and is excellent in recycling efficiency has been desired.

Dianhydrohexitols (isomannide, isoidide and isosorbide) which are anhydrous sugar alcohols can be produced from plant-derived materials such as mannitol, ididol and sorbitol. Therefore, these anhydrous sugar alcohols have been studied as recyclable resources (such as forest resources, biomass, wind power, small-scale hydraulic power and the like, which can be recycled, different from natural resources, such as petroleum and coal, which will be depleted in the future) used for the production of polymers, especially polyesters and polycarbonates. For example, see Kokai (Jpn. Unexamined Patent Publication) No. 2003-292603, WO 2007/013463 Pamphlet, U.S. Patent Publication 2005/143554 Specification, and GB Patent No. 1079686 Specification.

Disclosure of Invention

The object of the present invention is to provide a polycarbonate resin composition which comprises a plant-derived component, has improved properties such as improved moldability, water-absorbing property, impact resistance, melt flow characteristics, density, transparency and the like, exhibits less environmental load and is excellent in recycling efficiency. The more specific objects of the present invention are shown in items (A) to (E) below.

(A) There have been problems in that polycarbonate produced by using an anhydrous sugar alcohol as a raw material exhibits high melt viscosity and density. Therefore, the first object of the present invention is to provide a polycarbonate resin composition, which comprises a polycarbonate comprising a plant-derived component and a polymer or copolymer of an ester of acrylic acid series, exhibits reduced melt flow characteristics and density, and furthermore has transparency.

(B) There have been problems in that polycarbonate produced by using the anhydrous sugar alcohol as a raw material exhibits high melt viscosity and has a defect of moldability. Therefore, the second object of the present invention is to provide a polycarbonate resin composition, which comprises a polycarbonate comprising a plant-derived component and a biodegradable resin, and has improved moldability, and furthermore to provide a polycarbonate resin composition to which biodegradability at a level which is the same as or more than the level of biodegradability of a polycarbonate per se comprising a plant-derived component is imparted and which exhibits less environmental load.

(C) There have been problems in that the polycarbonate produced by using the anhydrous sugar alcohol as a raw material exhibits low mechanical properties, especially low impact resistance, and exhibits a high water-absorbing property. Therefore, the third object of the present invention is to provide a polycarbonate resin composition which comprises a polycarbonate comprising a plant-derived component and an aromatic polyester, and furthermore to provide a polycarbonate resin composition having improved impact resistance and water-absorbing property.

(D) There have been problems in that the polycarbonate produced by using the anhydrous sugar alcohol as a raw material exhibits high melt viscosity, water-absorbing property and density. Therefore, the fourth object of the present invention is to provide a polycarbonate resin composition which comprises a polycarbonate comprising a plant-derived component and a polyolefin and has improved moldability, furthermore to provide a polycarbonate resin having reduced water-absorbing ratio and specific gravity.

(E) There have been problems in that the polycarbonate produced by using the anhydrous sugar alcohol as a raw material exhibits low mechanical properties, especially low impact resistance, and a high melt viscosity and poor moldability. Therefore, the fifth object of the present invention is to provide a polycarbonate resin composition which

comprises a polycarbonate comprising a plant-derived component and a rubber-modified styrene resin, and exhibits improved impact resistance and moldability.

I. The following 1 and 2 are provided as means for achieving the first object described in the above (A).

1. A polycarbonate resin composition comprising 30 to 95 parts by weight of a polycarbonate (component A) represented by the following formula (1)

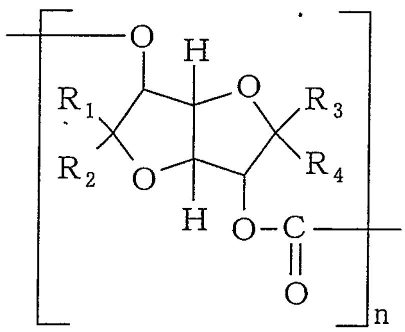

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of an acrylate resin (component B) which is a polymer of at least one ester of acrylic acid series represented by the following formula (2)

$$H_2C{=}C(R_5){-}COOR_6 \quad (2)$$

(in which $R_5$ represents a hydrogen atom or a methyl group, and $R_6$ represents an alkyl group having 1 to 18 carbon atoms) and has a ratio of the residues of the ester of acrylic acid series in the structural unit of 50 mol% or more (provided that the total of the component A and the component B is 100 parts by weight).
2. The polycarbonate resin composition according to item 1, wherein the ester of acrylic acid series is methyl methacrylate.

According to the above inventions 1 and 2, a polycarbonate resin composition which comprises a polycarbonate comprising a plant-derived component and a polymer or copolymer of an ester of acrylic acid series, exhibits reduced melt flow characteristics and density, and furthermore has transparency can be provided.
II. The following 3 to 5 are provided as means for achieving the second object described in the above (B).

3. A resin composition comprising 30 to 95 parts by weight of a polycarbonate (component A) represented by the following formula (1)

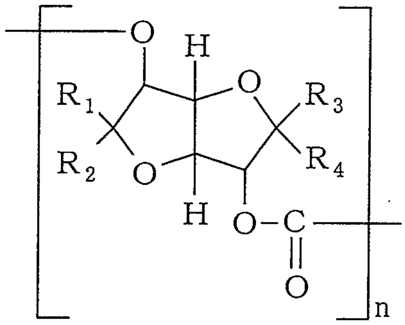

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a biodegradable resin (component B).

4. The resin composition according to item 3, wherein the biodegradable resin is a biodegradable polyester resin.

5. The resin composition according to item 4, wherein the biodegradable polyester resin is selected from poly-3-hydroxybutylate, polycaprolactone and polybutylene succinate.

According to above inventions 3 to 5, a polycarbonate resin composition which comprises a polycarbonate comprising a plant-derived component and a biodegradable resin, and exhibits improved moldability, and furthermore a polycarbonate resin composition to which biodegradability at a level which is the same as or more than the level of biodegradability of a polycarbonate per se comprising a plant-derived component is imparted and which exhibits less environmental load can be provided.

III. The following 6 and 7 are provided as means for achieving the third object described in the above (C).

6. A polycarbonate resin composition comprising 30 to 95 parts by weight of a polycarbonate (component A) represented by the following formula (1)

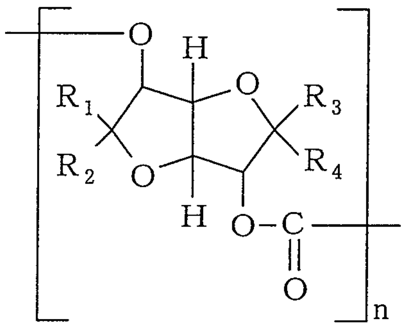

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of an aromatic polyester (component B) (provided that the total of the component A and the component B is 100 parts by weight).

7. The polycarbonate resin composition according to item 6, wherein the aromatic polyester is at least one compound selected from polyethylene naphthalate and polybutylene terephthalate.

According to above inventions 6 and 7, a polycarbonate resin composition which comprises a polycarbonate comprising a plant-derived component and an aromatic polyester, and exhibits improved impact resistance and a water-absorbing property can be provided.

IV. The following 8 and 9 are provided as means for achieving the fourth object described in the above (D).

8. A polycarbonate resin composition comprising 30 to 95 parts by weight of a polycarbonate (component A) represented by the following formula (1)

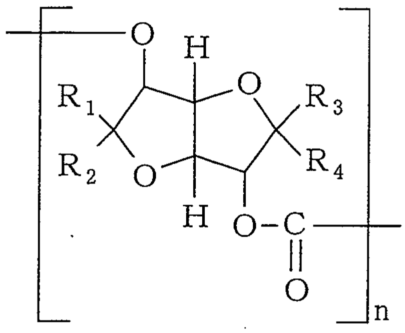

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a polyolefin (component B) (provided that the total of the component A and the component B is 100 parts by weight).

9. The resin composition according to item 8, wherein the polyolefin is at least one compound selected from polyethylene, polypropylene and polystyrene.

According to the above inventions 8 and 9, a polycarbonate resin composition which comprises a polycarbonate comprising a plant-derived component and a polyolefin, and has improved moldability, and furthermore a polycarbonate resin composition exhibiting reduced water-absorbing ratio and density can be provided.

V. The following 10 and 11 are provided as means for achieving the fifth object described in the above (E).

10. A polycarbonate resin composition comprising 30 to 95 parts by weight of a polycarbonate (component A) represented by the following formula (1)

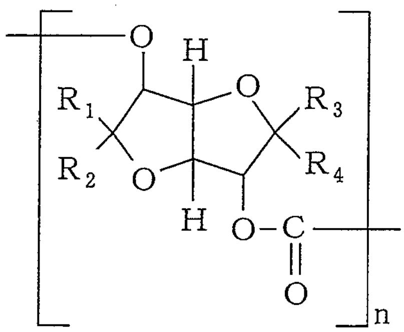

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a rubber-modified styrene resin (component B) (provided that the total of the component A and the component B is 100 parts by weight).

11. The resin composition according to item 10, wherein the rubber-modified styrene resin is a high impact polystyrene.

According to the above inventions 10 and 11, a polycarbonate resin composition which comprises a polycarbonate comprising a plant-derived component and a rubber-modified styrene resin, and exhibits improved impact resistance and moldability can be provided.

Best Mode for Carrying Out the Invention

First, the polycarbonate (the component A) represented by above formula (1) which is a main part in each invention of the above inventions 1 to 11 will be explained.

The polycarbonate (the component A) can be produced by a known method for producing a polycarbonate resin. Examples thereof include the phosgene process in which an aqueous alkaline solution comprising a dihydroxy compound as a main component is reacted with phosgene in the presence of an organic solvent, and the melt polycondensation process in which a dihydroxy compound (a diol compound) and a carbonate diester are subjected to melt polycondensation in the presence of a transesterification catalyst at a high temperature under a highly vacuumed condition. The melt polycondensation process should be performed under a highly vacuumed condition at a high temperature in the presence of a transesterification catalyst, while is cost effective compared with the phosgene process. In addition, it is advantageous because a polycarbonate resin substantially free of a chlorine atom can be obtained. It is preferable in the present invention that said polycarbonate is produced by the melt polycondensation process. The method for producing the polycarbonate (the component A) by the melt polycondensation process using a diol compound and a carbonate diester will be specifically described below.

The diol compound used for the production of the polycarbonate resin of the present invention is represented by the following formula (3). Examples thereof include isomannide, isoidide and isosorbide (the following formulae (4), (5) and (6)). These diol compounds are substances which can be obtained from the biomass in the nature and are one of the so-called recyclable resources. Isosorbide is obtained by hydrogenating D-glucose obtained from starch and then dehydrating the same. Other types of the diol compounds can be obtained in the same reaction using different starting substances. In particular, a polycarbonate comprising an isosorbide residue as a diol compound is preferable. Isosorbide is a diol compound easily produced from starch and the like. It is advantageous in that a large amount thereof can be obtained, and it is more excellent than isomannide and isoidide in the feature that it can be easily produced.

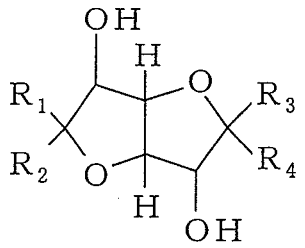

(3)

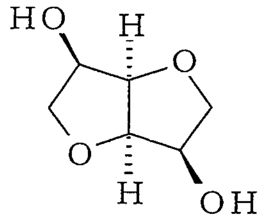

(4)

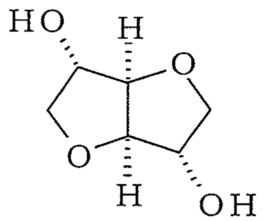

(5)

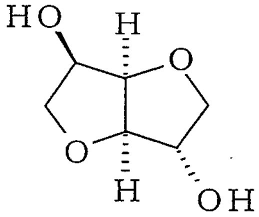

(6)

The method for purifying the diol compound used in the present invention is not particularly limited. Purification may be preferably performed either by simple distillation, rectification or recrystallization or by a combination thereof. The marketed products of diol compounds may comprise a stabilizer and a degraded substance formed during storage, which may adversely affect the polymer quality. Therefore, it is preferable that the diol compound should be purified again and the purified diol compound should be immediately used for the polymerization reaction when the diol compound is used to obtain a polymer. In the case where the diol compound which had been purified is used after storage over some period of time, it is preferable that the diol compound stored in the dried state at a low temperature of 40 °C or less in a light blocking and inert atmosphere should be used.

Regarding the diol compound used in the present invention, the content of organic impurities detected by gas chromatography is 0.3 % or less, preferably 0.1 % or less, more preferably 0.05 % or less, based on the total content thereof. Unless otherwise described, % which is a unit of the organic impurity content detected by gas chromatography means mol%. In addition, the total content of Na, Fe and Ca detected by the ICP emission analysis is 2 ppm or less, preferably 1 ppm or less. Unless otherwise described, ppm which is a unit of the total content of Na, Fe and Ca means ppm by weight.

The carbonate diester used in the present invention is represented by the following formula (7) (in the formula (7), $R_7$ and $R_8$ represent a group selected from an alkyl group, a cycloalkyl group or an aryl group, provided that $R_7$ and $R_8$ may be the same or different). Examples thereof include aromatic carbonate diesters such as diphenyl carbonate, ditolyl carbonate, dixylyl carbonate, bis(ethylphenyl) carbonate, bis(methoxyphenyl) carbonate, bis(ethoxyphenyl) carbonate, bis(chlorophenyl) carbonate, dinaphthyl carbonate, bis(biphenyl) carbonate and the like; and aliphatic carbonate diesters such as dimethyl carbonate, diethyl carbonate, dibutyl carbonate and the like. Among these compounds, it is preferable to use an aromatic carbonate diester, preferably an aromatic carbonate diester having 13 to 25 carbon atoms, more preferably diphenyl carbonate, considering the reactivity and cost-efficiency thereof.

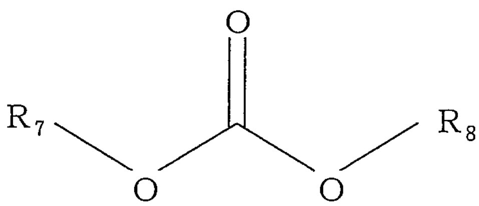

(7)

The method for purifying the carbonate diester used in the present invention is not particularly limited. Purification may be preferably performed either by simple distillation, rectification or recrystallization or by a combination thereof.

Regarding the carbonate diester used in the present invention, the content of organic impurities detected by gas chromatography is 0.3 % or less, preferably 0.1 % or less, more preferably 0.05 % or less, based on the total content thereof. In addition, the total content of Na, Fe and Ca detected by the ICP emission analysis is 2 ppm or less, preferably 1 ppm or less.

In the melt polymerization for obtaining the polycarbonate of the present invention, it is preferable to use a carbonate diester in an amount of 0.90 to 1.30 moles, more preferably 0.99 to 1.05 moles, based on one mole of the diol compound.

It is preferable to use a catalyst in the production method of the present invention. The catalysts which may be used are compounds exhibiting a catalyst property in the transesterification or esterification reaction, such as alkoxides or phenoxides of alkaline metals, alkoxides or phenoxides of alkaline earth metals, nitrogen-containing basic compounds, quaternary ammonium salts, organic acid salts of alkaline metals or alkaline earth metals, boron compounds, aluminum compounds, zinc compounds, boron compounds, silicon compounds, titanium compounds, organic tin compounds, lead

compounds, osmium compounds, antimony compounds, zirconium compounds, germanium compounds, manganese compounds and the like. The preferable compounds are (i) nitrogen-containing basic compounds, (ii) alkaline metal compounds and (iii) alkaline earth metal compounds, considering reactivity, effect on molded products, costs and public health aspect thereof. It may be used alone or two or more compounds may be used in combination. In particular, the combination of (i) with (ii), the combination of (i) with (iii) and the combination of (i), (ii) and (iii) are preferable.

The preferable compound as (i) is tetramethylammonium hydroxide. The preferable compound as (ii) is a sodium salt. It is especially preferable to use 2,2-bis(4-hydroxyphenyl)propane disodium.

(i) The nitrogen-containing basic compound should be used so that the basic nitrogen atom accounts for $1 \times 10^{-5}$ to $1 \times 10^{-3}$ mole, more preferable $2 \times 10^{-5}$ to $8 \times 10^{-4}$ mole, based on one mole of the diol compound.

Regarding the above catalysts, i.e., (ii) alkaline metal compounds and (iii) alkaline earth metal compounds, the total of added amounts of the alkaline metal element and the alkaline earth metal element should be preferable within the range from 0 to $1 \times 10^{-5}$ mole, more preferably within the range from 0 to $5 \times 10^{-6}$ mole.

In the method for producing the polycarbonate used in the present invention, it is preferable that the diol compound and the carbonate diester which are starting materials are heated in the presence of a polymerization catalyst in atmospheric pressure for the completion of a preliminary reaction, and then the mixture is heated at a temperature of 280 °C or lower under reduced pressure while stirred for distillation of a phenolic compound or an alcohol compound which is a side product. For the reaction system, an inert gas atmosphere to the material and the reaction mixture, such as a nitrogen atmosphere is preferable. The examples of the inert gases other than nitrogen include argon and the like.

It is preferable to conduct heating reaction under ordinary pressure in the initial stage of the reaction, whereby oligomerization reaction proceeds, and the problem that the molar balance would be changed due to the distillation of unreacted monomers during the distillation of the phenolic compound such as phenol or alcohol compounds under reduced pressure to result in the reduction of the polymerization degree is prevented. In the production method of the present invention, the phenol compound or alcohol compounds should be removed from the system (the reaction vessel) for the reaction to proceed. Reduction of pressure is effective and preferable therefor.

In the production method of the polycarbonate used in the present invention, the temperature condition as low as possible is preferable in order to prevent decomposition of the diol compound and to obtain a less colored and highly viscous resin. However, the condition for appropriate polymerization reaction at a polymerization temperature within the range from 180 °C or higher and 280 °C or lower is preferable. The condition at the highest polymerization temperature within the range from 230 to 270 °C is more preferable.

The polycarbonate used in the present invention has the lowest specific viscosity, in a solution obtained by dissolving 0.7 g of the polycarbonate in 100 ml of methylene chloride at 20 °C, of 0.20 or more, preferably 0.22 or more, and has the highest specific viscosity of 0.45 or less, preferably 0.37 or less, more preferably 0.34 or less. If the specific viscosity is less than 0.20, it is difficult to impart a sufficient mechanical strength to the molded product obtained from the polycarbonate of the present invention. If the specific viscosity is more than 0.45, the melt flow characteristics become too high, and the melt temperature at which flow characteristics necessary for molding can be provided becomes higher than the decomposition temperature, which is not preferable. The polymerization degree of the polycarbonate for achieving the above specific viscosity range , i.e., the number of the repeating units in the above formula (1), generally ranges from 10 to 10000, preferably 30 to 5000, more preferably 30 to 1000.

Further, the glass transition temperature of the polycarbonate determined by differential heat analysis at a rate of temperature increase of 10 °C per min is preferably within the range from 100 to 169 °C, more preferably within the range from 145 to 165 °C, most preferably within the range from 148 to 165 °C. If the glass transition temperature of the polycarbonate is within these ranges, the polycarbonate exhibits a sufficient heat resistance and moldability required for practical use. In particular, if the glass transition temperature of the polycarbonate is higher than these ranges, the melt viscosity of the polycarbonate becomes high, a sufficient dispersing property cannot be obtained in blending with other resins and the level of improvement in various properties resulted from the blending is small, which are not preferable.

It is preferable that the total content of Na, Fe and Ca in the polymer is 10 ppm or lower. If the total content of Na, Fe and Ca is more than this range, problems such as exhibition of more significant coloring and reduction of melt stability or/and hydrolysis decomposition resistance and the like occur, which are not preferable.

The Col-b value, of the polycarbonate used in the present invention, for expressing the color phase thereof is preferably 5 or less, more preferably 3 or less.

I. Inventions 1 and 2

In the above inventions 1 and 2, the ratio of the polycarbonate (the component A) represented by the above formula (1) in 100 parts by weight of the resin composition is 30 to 95 parts by weight. It is not preferable if the ratio of the polycarbonate (the component A) represented by the above formula (1) in 100 parts by weight of the resin composition

is larger than this range because the levels of the effects to reduce melt viscosity and density of the resin composition resulted from addition of the acrylate resin (the component B) become lower.

If the ratio of the component A is smaller than this range, sufficient mechanical properties and heat resistance cannot be obtained, and furthermore the content ratio of the plant-derived component becomes smaller, which are not preferable.

It is preferable that the content ratio of the plant-derived component in the polycarbonate resin composition obtained in the above inventions 1 and 2 is 25 wt% or more (the ratio of the polycarbonate (the component A) represented by the above formula (1) in 100 parts by weight of the resin composition is 30 parts by weight or more). If the content ratio is within this range, the resin composition is considered to have a sufficient biomass plastic degree (the ratio of a biomass-derived component in the biomass plastic composition comprised in a raw material or a product, based on the total amount of the biomass plastic composition) in the biomass plastic identification system carried out by Japan Bio-Plastics Association (may be abbreviated as JBPA, previous name of Biodegradable Plastics Society). The Japan BioPlastics Association is a voluntary private organization which is directed to establishment of the techniques and evaluation methods relating to biodegradable plastics and biomass plastics, promotion of practical applications thereof, promotion of contribution to the society and the like, and performs services including searches, research and development thereof, intercommunication of domestic and foreign related organizations, PR activity and making proposals. About 220 corporations (as of the end of March, 2007), such as resin makers, molding machine makers, processing makers, trading companies and the like are members thereof. The objects of the JBPA identification system is to perform PR activity regarding the biodegradable plastics and biomass plastics to end users, widely teach proper usage thereof, and encourage broad use of the products comprising the same. It is extremely advantageous to satisfy the standards of the identification system for promoting acknowledgment and broad use of the products. There is a case where substances capable of imparting properties, such as stabilizers and reinforced materials, in an amount of about 40 wt% at maximum may be added by a kneader to the polycarbonate and resin compositions thereof, depending on the use thereof. The ratio of the polycarbonate (the component A) represented by the above formula (1) in 100 parts by weight of the resin composition is preferably 42 to 95 parts by weight after the addition of the substances capable of imparting properties in the present invention so that the content ratio of the plant-derived component falls within the values prescribed by the biomass plastic identification system.

Further, in the above inventions 1 and 2, it is more preferable that in 100 parts by weight of the resin composition, the ratio of the polycarbonate (the component A) represented by the above formula (1) is 42 to 75 parts by weight. If the component A is 75 parts by weight or less, the density of the resin composition is 1.38 $g/cm^3$ or less, and the polycarbonate can be separated from polyvinyl chloride (having a density of about 1.40 $g/cm^3$) by the method utilizing the difference in densities thereof. Recently, the regulation and the social system for recycling used plastic products have been established and are actively utilized. However, polyvinyl chloride has a defect that an acidic gas is produced at a high temperature because it comprises chlorine, and therefore in the oil and gasification recycle by which polyethylene and polycarbonate, even those in the form of mixtures, can be processed without problems, polyvinyl chloride must be completely removed. In recycling plastics, there is a wet specific gravity separation method in which flakes of pulverized plastic products are charged into water or an organic solvent to separate a variety of plastics, based on difference in density. However, polyvinyl chloride is separated together with contaminants such as metal scraps and soils because it has the highest density among general-purpose plastics and may not be efficiently recycled. Therefore, the effect to easily recycle the resin composition of the present invention can be obtained by reducing the density of the resin composition to a degree at which the resin composition of the present invention can be separated from polyvinyl chloride, based on the difference in specific gravity.

The values of melt viscosity, at a frequency of 100 rad/s, of the polycarbonate resin compositions of the above inventions 1 and 2, determined by the dynamic measurement using a parallel plate having a plate diameter of 25 mm at a gap about 600 $\mu$m at a measurement temperature of 250 °C are preferably 700 Pa·s or less. If the melt viscosity is within this range, the resin composition has sufficient flow characteristics in a variety of molding such as injection molding, extrusion molding and the like.

The acrylate resin used in the above inventions 1 and 2 is a polymer which comprises 50 mol% or more (preferably 80 mol% or more, the most preferably 100 mol%) of at least one ester of acrylic acid series selected from acrylate esters or methacrylate esters in the structural unit. Further, the comonomer copolymerizable with the ester of acrylic acid series may be monomers of other acrylic acid series or comonomers other than the monomers of acrylic acid series. Among a variety of esters of acrylic acid series, the ester of acrylic acid series represented by the above general formula (2) is preferably used in the present invention.

Examples thereof include methyl acrylate, ethyl acrylate, n-propyl acrylate, 1-propyl acrylate, n-butyl acrylate, 1-butyl acrylate, $\lambda$-ethylhexyl acrylate, n-octyl acrylate, dodecyl acrylate, hexadecyl acrylate, octadecyl acrylate, methyl methacrylate, ethyl methacrylate, propyl methacrylate, n-butyl methacrylate, 1-butyl methacrylate, hexyl methacrylate, n-octyl methacrylate, 2-ethylhexyl methacrylate, decyl methacrylate, cyclohexyl methacrylate, octadecyl methacrylate and the like. However, the ester of acrylic acid series of the present invention is not limited thereto.

Examples of comonomers copolymerizable with these esters of acrylic acid series, other than esters of acrylic acid series include acrylic acid, acrylic amide, acrylonitrile, methacrylonitrile, vinyl acetate, vinyl propionate, vinyl laurate, dibutyl maleate, diethyl maleate, diethyl fumarate, dibutyl fumarate, vinyl methyl ether, vinyl butyl ether, butadiene, styrene and the like. The preferable acrylate resin used in the present invention is poly(methyl methacrylate) because workability thereof is excellent, cost efficiency thereof is high, and a large amount thereof can be obtained.

There may be a case where a resin composition is prepared by mixing a plurality of polymers and each polymer before mixing is transparent, but the resin composition obtained after mixing is clouded and is not transparent. However, if a polymer comprising the polycarbonate (the component A) represented by the above formula (1) and the ester of acrylic acid series is used in the preparation of resin compositions having a wide variety of mixing ratios, the resin compositions exhibiting excellent transparency can be obtained.

II. Inventions 3 to 5

The resin compositions according to the above inventions 3 to 5 comprise the polycarbonate (the component A) represented by the above formula (1) and a biodegradable resin (the component B).

The biodegradable resin is any type of resins having a biodegradable property with which the resin is decomposed into low molecular compounds in the presence of microorganisms in the nature, but is not particularly limited. Example thereof include aliphatic polyesters such as polyhydroxybutyrate (PHB), polyhydroxybutyrate/valerate, polyhydroxyvalerate/hexanoate, polycaprolactone (PCL), poly(butylene succinate) (PBS), polybutylene succinate/adipate, polyethylene succinate, polylactic acid resins, polymalic acid, polyglycolic acid, polydioxanone, poly(2-oxetanone) and the like; aliphatic aromatic copolyesters such as polybutylene succinate/ terephthalate, polybutylene adipate/terephthalate, poly(tetramethylene adipate)/terephthalate and the like; mixtures of natural polymers such as starch, cellulose, chitin, chitosan, gluten, gelatin, zein, soy proteins, collagen, keratin and the like with the above aliphatic polyesters or aliphatic aromatic copolyesters; polycarbonates such as poly(trimethylene carbonate) and the like; polyester amides, polyester carbonates; polyester polyurethanes and the like. Among them, polyesters are preferable because workability thereof is excellent, cost efficiency thereof is high and a large amount thereof can be obtained. Poly-3-hydroxybutylate (PHB), polybutylene succinate (PBS), polycaprolactone (PCL) and polylactic acid are more preferable, considering the properties thereof. Poly-3-hydroxybutylate (PHB) is especially preferable, considering the fact that the resin compositions thereof prepared by mixing a polycarbonate comprising a plant-derived component exhibit an extremely high biodegradable property, the method for producing polymers thereof using microorganisms has been established and poly-3-hydroxybutylate (PHB) is a well-known biomass material. In addition, polybutylene succinate (PBS) is especially preferable, considering the fact that the high level of effect to reduce the melt viscosity of the resin composition can be obtained even in a case where a small amount thereof is added.

The resin compositions of the above inventions 3 to 5 comprise 30 to 95 parts by weight of the polycarbonate (the component A) represented by the above formula (1) and 5 to 70 parts by weight of the biodegradable resin (the component B) (provided that the total of the component A and the component B is 100 parts by weight).

If the ratio of the biodegradable resin (the component B) in 100 parts by weight of the resin composition is larger than this range, problems that the ratio of the plant-derived component in the resin composition becomes small, heat resistance and mechanical properties are reduced and the like occur, which are not preferable. In addition, if the ratio of the component B is smaller than this range, the level of the effect to reduce melt viscosity resulted from addition of the component B, i.e., the levels of the effect to improve moldability and the effect to increase biodegradability become lower, which are not preferable. The ratio (of the component B) in 100 parts by weight of the resin composition is preferably 10 to 65 parts by weight, more preferably 20 to 60 parts by weight.

The values of the melt viscosity, at a frequency of 100 rad/s, of the polycarbonate resin composition of the above inventions 3 to 5, determined by the dynamic measurement using a parallel plate having a plate diameter of 25 mm at a gap of about 600 μm at a measurement temperature of 200 °C is preferably 6000 Pa·s or less. When the melt viscosity is within this range, the resin composition exhibits sufficient flow characteristics in a variety of molding such as injection molding, extruding molding and the like.

Further, it is preferable that the biodegradability of the polycarbonate resin compositions of the above inventions 3 to 5 after 28 days from start of the test for determining the biodegradability thereof is 20 % or more.

The biodegradability (also called degradation degree or biodegradation degree) is a value calculated using the following equation.

$$\text{Biodegradability (\%)} = (\text{test sample group BOD value} - \text{blank test group BOD value}) \times 100/\text{TOD}$$

BOD: biochemical oxygen demand
TOD: theoretical oxygen demand

Further, the content ratio of the plant-derived component in the polycarbonate resin compositions of the above inventions 3 to 5 is preferably 25 wt% or more. If the ratio is within this range, the resin composition is considered to have a sufficient biomass plastic degree (ratio of the biomass-derived component in the biomass plastic composition comprised in a raw material or a product, based on the total amount of the biomass plastic composition) in the biomass plastic identification system carried out by the JBPA.

III. Inventions 6 and 7

The resin compositions of the above inventions 6 and 7 comprise the polycarbonate (the component A) represented by the above formula (1), and an aromatic polyester (the component B).

The aromatic polyester in the above inventions 6 and 7 means a polyester containing an aromatic ring in the main or side chain, and a homopolyester or copolyester obtained by condensation polymerization of a dicarboxylic acid component and a diol component, condensation polymerization of an oxycarboxylic acid or condensation polymerization of these components. Examples of the dicarboxylic acid component include aliphatic dicarboxylic acids ($C_{4-40}$ dicarboxylic acids, preferably $C_{4-14}$ dicarboxylic acids, such as succinic acid, glutaric acid, adipic acid, sebacic acid, decanedicarboxylic acid, dodecanedicarboxylic acid, hexadecanedicarboxylic acid, dimer acid and the like), alicyclic dicarboxylic acids ($C_{8-12}$ dicarboxylic acids such as hexahydrophthalic acid, hexahydroterephthalic acid, himic acid and the like), aromatic dicarboxylic acids [$C_{8-16}$ arylene dicarboxylic acids (phthalic acid, isophthalic acid, terephthalic acid, 2,6-naphthalenedicarboxylic acid and the like), bisphenyl dicarboxylic acids (4,4'-biphenyldicarboxylic acid, diphenylether-4,4'-dicarboxylic acid, diphenylalkane dicarboxylic acids (4,4'-diphenylmethanedicarboxylic acid and the like), 4,4'-diphenylketone dicarboxylic acid and the like)], derivatives thereof (lower alkyl esters, derivatives capable of forming esters such as acid anhydrides and the like) and the like. The dicarboxylic acid component may be used alone or two or more thereof may be used in combinations. Further, a polycarboxylic acid such as trimellitic acid, pyromellitic acid and the like may be used in combination. Preferable dicarboxylic acid components include aromatic dicarboxylic acids such as terephthalic acid, naphthalenedicarboxylic acid and the like.

Examples of the diol components include aliphatic diols [for example, alkylene glycols (such as $C_{2-12}$ alkylene glycols, preferably $C_{2-10}$ alkylene glycols including ethylene glycol, trimethylene glycol, propylene glycol, 1,4-butanediol, hexanediol and the like), polyalkylene glycols {glycols having a plurality of oxy $C_{2-4}$ alkylene units, such as diethylene glycol, dipropylene glycol, ditetramethylene glycol, triethylene glycol, polytetramethylene glycol and the like} and the like], alicyclic diols [such as 1,4-cyclohexanediol, cycloalkane dialkanols ($C_{5-6}$ cycloalkane di-$C_{1-2}$alkanols such 1,4-cyclohexanedimethanol and the like), hydrogenated bisphenol A and the like] and the like. Aromatic diols such as hydroquinone, resorcinol, biphenol, bisphenols or $C_{2-3}$ alkylene oxide adducts thereof [2,2-bis(4-hydroxyphenyl)propane, 2,2-bis-(4-(2-hydroxyethoxy)phenyl)propane or brominated derivatives thereof], xylene glycol and the like may be also used in combination. The diol component may be used alone or two or more thereof may be used in combination. Further, as necessary, a polyol such as glycerin, trimethylolpropane, trimethylolethane, pentaerythritol and the like may be used in combination. Preferable diol components include $C_{2-6}$ alkylene glycols (linear alkylene glycols such as ethylene glycol, trimethylene glycol, propylene glycol, 1,4-butanediol and the like), polyalkylene glycols having an oxy-alkylene unit, the number of the repeating units being 2 to 4 [glycols having a poly(oxy-$C_{2-4}$alkylene) unit such as diethylene glycol], 1,4-cyclohexanedimethanol and the like.

Examples of oxycarboxylic acids include oxybenzoic acid, oxynaphthoic acid, 4-carboxy-4'-hydroxybiphenyl, hydroxyphenylacetic acid, glycolic acid, D-, L- or D/L-lactic acid, oxycaproic acid and the like or derivatives thereof.

Preferable polyester resins include homopolyesters or copolyesters having at least one unit selected from cycloalkanedialkylene arylate units (1,4-cyclohexanedimethylene terephthalate unit and the like) and alkylene arylate units (alkylene terephthalate and/or alkylene naphthalate units such as $C_{2-4}$ alkylene terephthalate units, $C_{2-4}$ alkylene naphthalate units and the like) [for example, as a main component (for example, in an amount of 50 to 100 wt%, preferably about 75 to 100 wt%)] [for examples, homopolyesters such as polyl,4-cyclohexanedimethylene terephthalate, polyalkylene terephthalate (such as poly-$C_{2-4}$ alkylene terephthalates including polyethylene terephthalate (PET), polypropylene terephthalate (PPT), polybutylene terephthalate (PBT) and the like), polyalkylene naphthalates (such as poly-$C_{2-4}$ alkylene naphthalates including polyethylene naphthalate, polypropylene naphthalate, polybutylene naphthalate and the like); and copolyesters comprising, as a main component, (for example, an amount of 50 wt% or more of) at least one unit selected from cycloalkanedialkylene terephthalates, alkylene terephthalates and alkylene naphthalates)].

Especially preferable polyester resins include polybutylene terephthalate resins comprising a butylene terephthalate unit as a main component [such as polybutylene terephthalate and copolyesters comprising a butylene terephthalate unit as a main component (polybutylene terephthalate copolyesters: for example, isophthalic acid-modified polybutylene terephthalate and the like)], polypropylene terephthalate resins comprising a propylene terephthalate unit as

a main component [such as polypropylene terephthalate, and copolyesters comprising a propylene terephthalate unit as a main component (polypropylene terephthalate copolyesters)], polyethylene terephthalate resins comprising an ethylene terephthalate unit as a main component [such as polyethylene terephthalate, and copolyesters comprising an ethylene terephthalate unit as a main component (polyethylene terephthalate copolyesters: for example, 1,4-cyclohexanedimethanol-modified polyethylene terephthalate, 4-hydroxybenzoic acid-modified polyethylene terephthalate and the like)], and polyethylene naphthalate resins comprising an ethylene naphthalate unit as a main component [such as polyethylene naphthalate, and copolyesters comprising an ethylene naphthalate unit as a main component (polyethylene naphthalate copolyesters: for example, terephthalic acid-modified polyethylene naphthalate, isophthalic acid-modified polyethylene naphthalate, 1,4-cyclohexanedimethanol-modified polyethylene naphthalate, 4-hydroxybenzoic acid-modified polyethylene naphthalate and the like)]. The polyester resin may be used alone or two or more thereof may be used in combination. Copolymerizable monomers in the copolyesters include $C_{2-6}$ alkylene glycols (linear alkylene glycols such as ethylene glycol and the like), polyalkylene glycols having an oxy alkylene unit, the number of the repeating units being about 2 to 4 (glycols comprising a poly(oxy-$C_{2-4}$ alkylene) unit such as diethylene glycol, polytetramethylene glycol and the like), $C_{4-12}$ aliphatic dicarboxylic acids (glutaric acid, adipic acid, sebacic acid and the like), alicyclic diols (1,4-cyclohexanedimethanol and the like), aromatic diols [for example, $C_{2-3}$ alkylene oxide adducts of bisphenols such as 2,2-bis(4-(2-hydroxyethoxy)phenyl)propane and the like, hydroquinone, resorcin, 3,3'- or 4,3'- or 4,4'-dihydroxydiphenyl, 1,4- or 2,6-dihydroxynaphthalene and the like], aromatic dicarboxylic acids [(a)symmetric aromatic dicarboxylic acids (phthalic acid, isophthalic acid, 5-sulfoisophthalic acid monosodium salt and the like), diphenyldicarboxylic acids (4,4'-diphenyldicarboxylic acid and the like), naphthalenedicarboxylic acids (2,6-naphthalenedicarboxylic acid and the like) and the like], oxycarboxylic acids (oxybenzoic acid (3- or 4-hydroxybenzoic acid and the like), oxynaphthoic acid (6-hydroxy-2-naphthoic acid, 6-hydroxy-1-nathtoic acid and the like), 4-carboxy-4'-hydroxybiphenyl and the like) and the like. The aromatic polyesters may be linear, branched or crosslinked unless melt moldability and the like are reduced. The aromatic polyester may be a liquid crystalline polyester. Further, the aromatic polyester includes (liquid crystalline) aromatic polyester amide resins modified by an amino group-containing monomer (such as 3- or 4-aminophenol, 3- or 4-amonobenzoic acid, tetramethylenediamine, hexamethylenediamine, nonamethylenediamine, m-xylylendiamine and the like). The aromatic polyesters can be produced by a conventional method, such as transesterification, direct esterification and the like.

The resin compositions of the above inventions 6 and 7 comprise 30 to 95 parts by weight of the polycarbonate (the component A) represented by the above formula (1) and 5 to 70 parts by weight of the aromatic polyester (the component B) (provided that the total of the component A and the component B is 100 parts by weight).

If the ratio of the aromatic polyester (the component B) in 100 parts by weight of the resin composition is larger than this range, the content ratio of the plant-derived component in the resin composition becomes small, which is not preferable. In addition, if the ratio of the component B is smaller than this range, the levels of effects to improve impact resistance and to reduce the water absorbing property become low, which are not preferable. The preferable ratio of the aromatic polyester (the component B) in 100 parts by weight of the resin composition varies, depending on the type of the aromatic polyester used for the resin composition. However, the ratio of polyethylene naphthalate is preferably 25 to 70 parts by weight, more preferably 30 to 60 parts by weight. The ratio of polybutylene terephthalate is preferably 5 to 60 parts by weight, more preferably 25 to 60 parts by weight.

The Izod impact strength of the polycarbonate resin composition of the present invention determined by measuring the Izod impact strength of a notched sample of the polycarbonate resin composition in a method in accordance with ASTM D-256 is preferably 20 J/m or more, more preferably 25 J/m or more, the most preferably 30 J/m or more. If the Izod impact strength is within this range, the resin composition exhibits sufficient impact strength in practical use, and can be used for a variety of use, such as use in the automobile industry, the electric, electronic and office automation industries and the like.

The water-absorbing ratio of the polycarbonate resin composition of the present invention, obtained after ten days from start of the test in which the water-absorbing ratio of a sample having a thickness of 2 mm was determined using a method in accordance with JIS K7209 is preferably 2.0 wt% or less. If the water- absorbing ratio is beyond the range, the weight and density of the resin composition are increased and hydrolysis resistance thereof is reduced, which are not preferable. The water-absorbing ratio of the polycarbonate resin composition is preferably 1.5 wt% or less.

Further, the content ratio of the plant-derived component in the polycarbonate resin composition of the present invention is preferably 25 wt% or more. If the ratio is within this range, the resin composition is considered to have a sufficient biomass plastic degree (the ratio of the biomass-derived component in the biomass plastic composition comprised in a raw material or a product, based on the total amount of the biomass plastic composition) in the biomass plastic identification system carried out by the JBPA.

IV. Inventions 8 and 9

In above inventions 8 and 9, the ratio of the polycarbonate (the component A) represented by the above formula

(1) in 100 parts by weight of the resin composition is 30 to 95 parts by weight. If the ratio of the polycarbonate (the component A) represented by the above formula (1) in 100 parts by weight of the resin composition is smaller than this range, the resin composition does not exhibit a sufficient mechanical property or heat resistance, and in addition the ratio of the plant-derived component in the resin composition becomes small, which are not preferable. If the ratio of component A is larger than this range, the levels of the effects to reduce melt viscosity and density and the effect to improve water absorbing property, resulted from addition of the polyolefin become small, which are not preferable. The ratio (of the component A) in 100 parts by weight of the resin composition is preferably 40 to 90 parts by weight, more preferably 45 to 85 parts by weight.

The values of melt viscosity, at a frequency of 100 rad/s, of the polycarbonate resin compositions of the above inventions 8 and 9, determined by the dynamic measurement thereof using a parallel plate having a plate diameter of 25 mm at a gap of about 600 μm at a measurement temperature of 250 °C are preferably 700 Pa·s or less. If the melt viscosity is within this range, the resin composition exhibits sufficiently flow characteristics in a variety of molding such as injection molding, extrusion molding and the like.

Further, the water-absorbing ratio of the polycarbonate resin composition of the above inventions 8 and 9, obtained after ten days from start of the test in which the water-absorbing ratio of a sample having a thickness of 2 mm was determined in a method in accordance with JIS K7209 is preferably 2.0 wt% or less. If the water-absorbing ratio is larger than this range, the weight and density of the resin composition are increased and hydrolysis resistance thereof is reduced, which are not preferable. The water-absorbing ratio of the polycarbonate resin composition is preferably 1.5 wt% or less.

Further, the content ratio of the plant-derived component in the polycarbonate resin compositions of the above inventions 8 and 9 is preferably 25 wt% or more. If the ratio is within this range, the resin composition is considered to have a sufficient biomass plastic degree (the ratio of the biomass-derived component in the biomass plastic composition comprised in a raw material or a product, based on the total amount of the biomass plastic composition) in the biomass plastic identification system carried out by the JBPA.

The term "polyolefin" used in above inventions 8 and 9 is a polymer comprising a repeating unit derived from an olefin having 2 to 20 carbon atoms, more specifically it is a homopolymer or a copolymer of an olefin selected from olefins having 2 to 20 carbon atoms. If the polyolefin segment has tacticity, it may be an isotactic polyolefin or a syndiotactic polyolefin. Examples of olefins having 2 to 20 carbon atoms include linear or branched α-olefins, cyclic olefins, aromatic vinyl compounds, conjugated dienes, unconjugated dienes and the like. Examples of the linear or branched α-olefins include those having 2 to 20 carbon atoms, preferably those having 2 to 10 carbon atoms, such as ethylene, propylene, 1-butene, 1-pentene, 3-methyl-1-butene, 1-hexene, 4-methyl-1-pentene, 3-methyl-1-pentene, 3-ethyl-1-pentene, 4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene, 1- eicocene and the like. Examples of cyclic olefins include those having 3 to 20 carbon atoms, preferably those having 5 to 15 carbon atoms, such as cyclopentene, cycloheptene, norbornene, 5-methyl-2-norbornene, tetracyclododecene, vinylcyclohexane and the like. Examples of aromatic vinyl compounds include styrene and mono- or polyalkylstyrenes such as α-methylstyrene, o-methylstyrene, m-methylstyrene, p-methylstyrene, o,p-dimethylstyrene, o-ethylstyrene, methylstyrene, p-ethylstyrene and the like. Examples of conjugated dienes include those having 4 to 20 carbon atoms, preferably 4 to 10 carbon atoms, such as 1,3-butadiene, isoprene, chloroprene, 1,3-pentadiene, 2,3-dimethylbutadiene, 4-methyl-1,3-pentadiene, 1,3-pentadiene, 1,3-hexadiene, 1,3-octadiene and the like. Examples of unconjugated dienes include those having 5 to 20 carbon atoms, preferably 5 to 10 carbon atoms, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethyl-5-isopropyl-2-norbornene, 2,3-diisopropylidene-5-norbornene, 2-ethylidene-3-isopropylidene-5-norbornene, 2-propenyl-2,2-norbornadiene and the like.

Among them, polyethylene, polypropylene and polystyrene are especially preferable because workability is excellent, cost efficiency is high, and a large amount can be obtained. These polyolefins may be used alone or a plurality may be used in combination.

V. Inventions 10 and 11

The resin compositions of the above inventions 10 and 11 comprise 30 to 95 parts by weight of the polycarbonate (the component A) represented by the above formula (1) and 5 to 70 parts by weight of the rubber-modified styrene resin (the component B) (provided that the total of the component A and the component B is 100 parts by weight).

The rubber-modified styrene resin means a polymer comprising a matrix of an aromatic vinyl polymer having dispersed therein a rubber-like polymer in the form of particles, and it can be obtained by subjecting a mixture of monomers which was prepared by adding, in the presence of the rubber-like polymer, an aromatic vinyl monomer and as necessary

a vinyl monomer copolymerizable therewith, to graft polymerization using a known bulk polymerization, bulk-suspension polymerization, solution polymerization or emulsion polymerization. Examples of these rubber-modified styrene resins include high-impact polystyrene (HIPS), ABS resin (acrylonitrile-butadienestyrene copolymer), AAS resin (acrylonitrile-acrylic rubber-styrene copolymer), AES resin (acrylonitrile-ethylene propylene rubber-styrene copolymer) and the like. In particular, high-impact polystyrene is preferable because it exhibits a high level of improvement in impact resistance. In addition, high-impact polystyrene exhibits a high level of effect to reduce melt viscosity, compared with the general-purpose polystyrene, under the condition that the added amounts of the high-impact polystyrene and the general-purpose polystyrene are the same.

The ratio of the polycarbonate (the component A) represented by the above formula (1) in 100 parts by weight of the resin composition is 30 to 95 parts by weight in the above inventions 10 and 11. If the ratio of the polycarbonate (the component A) represented by the above formula (1) in 100 parts by weight of the resin composition is larger than this range, the levels of the effect to improve impact resistance and the effect to reduce melt viscosity resulted from addition of the rubber-modified styrene resin (the component B) become low, which are not preferable. If the ratio of the component A is smaller than this range, a sufficient heat resistance cannot be obtained, and in addition the content ratio of the plant-derived component in the resin composition becomes small, which are not preferable. The ratio of the polycarbonate (the component A) represented by the above formula (1) is preferably 40 to 90 parts by weight, more preferably 45 to 80 parts by weight.

It is preferable that the content ratio of the plant-derived component in the polycarbonate resin composition of the above inventions 10 and 11 is 25 wt% or more (the ratio of the polycarbonate (the component A) represented by the above formula (1) in 100 parts by weight of the resin composition is 30 parts by weight or more). If the ratio is within this range, the resin composition is considered to have a sufficient biomass plastic degree (the ratio of the biomass-derived component in the biomass plastic composition comprised in a raw material or a product, based on the total amount of the resin composition) in the biomass plastic identification system carried out by the JBPA.

The values of melt viscosity, at a frequency of 100 rad/s, of the polycarbonate resin compositions of the above inventions 10 and 11, determined by the dynamic measurement using a parallel plate having a plate diameter of 25 mm at a gap of about 600 $\mu$m at a measurement temperature of 250 °C are preferably 700 Pa·s or less. If the melt viscosity is within this range, the resin composition exhibits sufficient flow characteristics in a variety of molding such as injection molding, extrusion molding and the like.

The Izod impact strength of the polycarbonate resin composition of the above inventions 10 and 11, determined by measuring the Izod impact strength of a notched sample of the polycarbonate resin composition in a method in accordance with ASTM D-256 is preferably 20 J/m or more, more preferably 25 J/m or more, most preferably 30 J/m or more. If the Izod impact strength is within this range, the resin composition exhibits sufficient impact strength in practical use, and can be used for a variety of uses, such as in the automobile industry, electric, electronic and office automation industries, and the like.

Any optional methods may be used for producing the resin compositions of the above inventions 1 to 11. For example, as the method, a method comprising premixing each component, and then molding the mixture by a molding technique represented by injection molding may be used. Examples of premixing means include processes using a hand blender, a Nauta mixer, a V-blender, a Henschel mixer, a mechanochemical device, an extrusion mixer and the like. In the premixing step, as necessary, an extrusion granulator or briquetting machine may be used for performing granulation. Molding means after the premixing step include injection molding, extrusion molding, blow molding and the like.

Pelletization may be performed after the premixing step. In this technique, a melt mixing machine represented by the bent type biaxial extruder is used for melt mixing, and a machine such as a pelletizer and the like is used for pelletization after the premixing step. Other types of melt mixing machines include the Banbury mixer, a kneading roll, temperature-controlled agitating vessel and the like, but the vent-type biaxial extruder is preferable. Other than the above methods, a method comprising charging each component independently into a melt mixing machine represented by the biaxial extruder or a molding machine, without subjecting each component to premixing may be used.

As other effective mixing method, a method comprising dissolving and swelling each resin component in an organic solvent such as methylene chloride and the like or other suitable solvent, agitating the solution by a mechanical means or ultrasound, and then evaporating the solvent to concentrate the solution is exemplified. Further, in the preparation of the component A (the polycarbonate resin) or the component B (the acrylate resin, the biodegradable resin, the aromatic polyester, the polyolefin, the rubber-modified styrene resin) by polymerization, in situ polymerization in which monomers before polymerization are mixed with other component resin and then polymerization is performed is an effective mixing method.

The polycarbonate resin composition of the present invention may be applied to a variety of uses such as in the optical media industry, electric, electronic and office automation industries, automobile and industrial machine industries, medical industry and security industry, and use as sheets, films, wrappings and miscellaneous goods, and the like. Examples of the use include DVD, CD-ROM, CD-R and mini discs as use in the optical media industry; use for mobile phones, housings for personal computers, packages for batteries, parts for liquid crystals and connectors as use

in the electric, electronic and office automation industries; use for head lamps, inner lens, door handles, bumpers, fenders, roof rails, instrumental panels, clusters, console boxes, cameras and electric tools as use in the automobile and industrial machine industries; use for nameplates, carports, diffusion and reflection films for liquid crystals and tanks for drinkable water in medical and security industries; use as parts for Japanese pinball machines, extinguisher cases, and for miscellaneous goods, and the like.

In the present invention, injection molding, compression molding, injection compression molding, extrusion molding, blow molding and the like may be used as a method comprising molding the polycarbonate to obtain a molded product for said use. Examples of the methods for producing films and sheets include solvent casting, melt extrusion, the calender method and the like.

EXAMPLES

The present invention will be specifically described with reference to the following examples, but is not limited thereto. It is obvious that other modes of invention are included in the scope of the present invention so long as they have the gist of the present invention.

[Production Example 1]

(Production of the component A)

25.0 kg (171 moles) of isosorbide which had been subjected to simple distillation once (manufactured by Rocket Corporation, the total content of Na, Fe and Ca: 0.6 ppm) and 36.7 kg (171 moles) of diphenyl carbonate (the total content of Na, Fe and Ca: 0.4 ppm) were charged into a material dissolving tank made from SUS316 (with an agitator), and were dissolved under a nitrogen atmosphere at a jacket temperature of 150 °C. Next, the melt solution of the materials was delivered into the first reaction tank made from SUS316 provided with a distillation column, an agitator and a capacitor, 2,2-bis(4-hydroxyphenyl)propane disodium salt (11.6 mg, 4.28 x $10^{-5}$ mole) and tetramethylammonium hydroxide (6.24 g of a 25% aqueous solution, 1.71 x $10^{-2}$ mole) were added thereto as polymerization catalysts, and the materials were reacted with stirring, while the pressure of the inside of the reaction tank was reduced to 30 mmHg (4.00 kPa), the temperature thereof was raised to 200 °C, and the produced phenol was removed by distillation. When the distilled amount of phenol reached a predetermined value, the reaction solution was delivered to a second tank made from SUS316 provided with a distillation tube, an agitator and a polymer discharge hole. After the temperature of the inside of the tank was raised to 245 °C, the pressure of the inside of the reaction tank was further reduced, the reaction was stopped when the value of electric power required to agitate the reaction solution reached a predetermined value, and the produced polymer was recovered. The specific viscosity of the obtained polycarbonate was 0.31, and the glass transition temperature thereof was 165 °C.

I. Examples corresponding to the inventions 1 and 2

Isosorbide manufactured by Rocket Corporation, diphenyl carbonate manufactured by Teijin Chemicals Ltd. and methylene chloride manufactured by Wako Pure Chemical Industries, Ltd. were used in the examples. The specific viscosity of the polymer was obtained by determining the viscosity of a solution comprising 0.7 g of the polycarbonate dissolved in 100 ml of a methylene chloride mixture solvent at 20 °C. In addition, the total content of Na, Fe and Ca in the polymer was estimated using the ICP emission analysis device VISTA MP-X (multi type) (Varian, Inc.) For evaluating hue of the polymer, the Col-b value of the polymer was determined using the UV-VIS RECORDING SPECTROPHOTOMETER (manufactured by SHIMADZU CORPORATION) in accordance with JIS Z 8722. The glass transition temperature of the polymer was determined using DSC2920 manufactured by TA Instruments, Inc. in a nitrogen atmosphere at a rate of temperature increase of 10 °C per min. The melt viscosity of the polymer was determined by preparing samples by melt mixing the polymer at a mixing temperature of 250 °C at mixing rate of 30 rpm for 10 min using the laboplast mill (50C150, Toyo Seiki Seisakusho Ltd.), and comparing values, at a frequency of 100 rad/s, of the samples, determined by the dynamic measurement with a rheometer (ARES, manufactured by TA instruments Inc.) using a parallel plate having a plate diameter of 25 mm at a gap of about 600 μm at a measurement temperature of 250 °C. In addition, the specific gravity of the polymer was determined using a disc-shaped molded fragment, having a thickness of 2 mm and a diameter of 35 mm and prepared by an injection molding machine (PS 20, the PS-type injection molding machine, manufactured by NISSEI PLASTIC INDUSTRIAL CO., LTD.) at a cylinder temperature of 250 °C at a mold temperature of 80 °C. The transparency of the polymer was determined by evaluating the disc-shaped molded fragment with naked eyes. The density of the polymer was determined using MD200S manufactured by MIRAGE.

The polycarbonate obtained in the above production example 1 was used as the component A.

[Example 1]

50 parts by weight of the component A obtained in the production example 1 and 50 parts by weight of poly (methyl methacrylate) (ACRYPET (registered trade name) MD, manufactured by MITSUBISHI RAYON CO., LTD., may be referred to as PMMA, hereinafter) in the form of pellet were mixed and were formed into samples using the laboplast mill and an injection molding machine. Every property of the obtained polycarbonate resin composition was determined. The results thereof are shown in Table 1.

[Example 2]

The same procedural steps as in the example 1 were repeated, except that the ratio by weight of the component A obtained in the production example 1 to the PMMA (the component B) was 90/10 (=the component A/the component B). The results thereof are shown in Table 1.

[Comparative Example 1]

The same procedural steps as in the example 1 were repeated, except that only the component A obtained in the production example 1 was used. The results thereof are shown in Table 1.

[Comparative Example 2]

The same procedural steps as in the example 1 were repeated, except that the ratio by weight of the component A obtained in the production example 1 to the PMMA (the component B) was 25/75 (=the component A/the component B). The results thereof are shown in Table 1. The resin composition exhibited excellent transparency. However, the content ratio of the plant-derived component was less than 25 wt%, and thus the resin composition cannot be considered to have a sufficient biomass plastic degree (the ratio of the biomass-derived component in the biomass plastic composition comprised in a raw material or a product, based on the total amount of the biomass plastic composition) in the biomass plastic identification system carried out by the Japan BioPlastics Association.

[Comparative Example 3]

The same procedural steps as in the example 1 were repeated, except that 50 parts by weight of the component A obtained in the production example 1 and 50 parts by weight of polyethylene (Hi-ZEX (registered trade name) 2200J, manufactured by Prime Polymer Co., Ltd., may be referred to as PE, hereinafter) as the component B were used. The results thereof are shown in Table 1.

[Comparative Example 4]

The same procedural steps as in the example 1 were repeated, except that 50 parts by weight of the component A obtained in the production example 1 and 50 parts by weight of polypropylene (Prime Polypro (registered trade name) F109V, manufactured by Prime Polymer Co., Ltd., may be referred to as PP, hereinafter) as the component B were used. The results thereof are shown in Table 1.

[Comparative Example 5]

The same procedural steps as in the example 1 were repeated, except that 50 parts by weight of the component A obtained in the production example 1 and 50 parts by weight of polystyrene (Polystyrol K-grade, manufactured by BASF, may be referred to as PS, hereinafter) as the component B were used. The results thereof are shown in Table 1.

Table 1

| | Component A (parts by weight) | Component B (parts by weight) | Properties | | | |
|---|---|---|---|---|---|---|
| | Polycarbonate comprising plant-derived component | | Melt viscosity (Pa·s) | Density ($g/cm^3$) | Transparency | Plant-derived component content ratio (wt%) |
| Example 1 | 50 | PMMA 50 | 530 | 1.30 | Transparent | 42 |
| Example 2 | 90 | PMMA 10 | 460 | abbrev. | Transparent | 76 |
| Comparative Example 1 | 100 | PMMA 0 | 740 | 1.45 | Transparent | 84 |
| Comparative Example 2 | 25 | PMMA 75 | abbrev. | abbrev. | Transparent | 21 |
| Comparative Example 3 | 50 | PE 50 | 380 | 1.11 | clouded | 42 |
| Comparative Example 4 | 50 | PP 50 | 150 | 1.13 | clouded | 42 |
| Comparative Example 5 | 50 | PS 50 | 230 | 1.18 | clouded | 42 |

II. Examples corresponding to the inventions 3 to 5

Isosorbide manufactured by Rocket Corporation, diphenyl carbonate manufactured by Teijin Chemicals Ltd. and methylene chloride manufactured by Wako Pure Chemical Industries, Ltd. were used in the examples. The specific viscosity of the polymer was obtained by determining the viscosity of a solution comprising 0.7 g of the polycarbonate dissolved in 100 ml of a methylene chloride mixture solvent at 20 °C. In addition, the total content of Na, Fe and Ca in the polymer was estimated using the ICP emission analysis device VISTA MP-X (multi type) (Varian, Inc.). For evaluating hue of the polymer, the Col-b value of the polymer was determined using the UV-VIS RECORDING SPECTROPHOTOMETER (manufactured by SHIMADZU CORPORATION) in accordance with JIS Z 8722. The melt viscosity of the polymer was determined by comparing values, at a frequency of 100 rad/s, of the samples, determined by the dynamic measurement with a rheometer (ARES, manufactured by TA instruments Inc.) using a parallel plate having a plate diameter of 25 mm at a gap of about 600 μm at a measurement temperature of 200 °C. In addition, the biodegradability of the polymer was evaluated, in accordance with JIS K6950, under the dark culture conditions with stirring at a sample concentration of 30 mg/l at a mud concentration of 100 g/1,25 °C, and the values thereof obtained after 28 days from start of the test were compared.

The polycarbonate obtained in the production example 1 was used as the component A.

The component B selected from the following biodegradable polymers was used.

- Poly-3-hydroxybutylate (PHB)
- Polycaprolactone (PCL)
- Polybutylene succinate (PBS)

[Examples 3 to 4]

The component A obtained in the production example 1 and PHB were mixed in the ratio by weight shown in Table 2, at a mixing temperature of 200 °C at a mixing rate of 30 rpm for 5 min, using the laboplast mill (50C150, Toyo Seiki Seisakusho Ltd.) All of the properties of the obtained polycarbonate resin composition are shown in Table 2.

[Examples 5 to 7]

The component A obtained in the production example 1 and PCL were mixed in the ratio by weight shown in Table 2, at a mixing temperature of 250 °C at a mixing rate of 30 rpm for 20 min, using the laboplast mill. All of the properties of the obtained polycarbonate resin composition are shown in Table 2.

[Examples 8 and 9]

The component A obtained in the production example 1 and PBS were mixed in the ratio by weight shown in Table 2, at a mixing temperature of 250 °C at a mixing rate of 30 rpm for 10 min, using the laboplast mill. All of the properties of the obtained polycarbonate resin composition are shown in Table 2.

[Comparative Example 6]

Determination as in the examples 3 to 9 was performed only for the component A obtained in the production example 1. The results thereof are shown in Table 2.

Table 2

| | Component A (parts by weight) | Component B (parts by weight) | | | Melt viscosity (Pa·s) | Biodegradability (%) | Plant-derived component content ratio (wt%) |
|---|---|---|---|---|---|---|---|
| | | PHB | PCL | PBS | | | |
| Example 3 | 50 | 50 | - | - | 210 | 92.9 | 92 |
| Example 4 | 95 | 5 | - | - | 5300 | - | 85 |
| Example 5 | 30 | - | 70 | - | 55 | - | 25 |
| Example 6 | 50 | - | 50 | - | 66 | 5.8 | 42 |
| Example 7 | 95 | - | 5 | - | 2900 | - | 80 |
| Example 8 | 50 | - | - | 50 | 700 | 6.0 | 42 |
| Example 9 | 95 | - | - | 5 | 800 | - | 80 |
| Comparative Example 6 | 100 | - | - | - | 9500 | 12.7 | 84 |

III. Examples corresponding to the inventions 6 and 7

Isosorbide manufactured by Rocket Corporation and diphenyl carbonate manufactured by Teijin Chemicals Ltd. were used in the examples. The specific viscosity of the polymer was obtained by determining the viscosity of a solution comprising 0.7 g of the polycarbonate dissolved in 100 ml of a methylene chloride mixture solvent at 20 °C. In addition, the total content of Na, Fe and Ca in the polymer was estimated using the ICP emission analysis device VISTA MP-X (multi type) (Varian, Inc.). For evaluating hue of the polymer, the Col-b value of the polymer was determined using the UV-VIS RECORDING SPECTROPHOTOMETER (manufactured by SHIMADZU CORPORATION), in accordance with JIS Z 8722. The glass transition temperature of the polymer was determined using DSC2920 manufactured by TA Instruments, Inc. in a nitrogen atmosphere at a rate of temperature increase of 10 °C per min. In addition, disc-shaped molded fragments having a thickness of 2 mm and a diameter of 35 mm were produced using an injection molding machine (PS20, the PS-type injection molding machine, manufactured by NISSEI PLASTIC INDUSTRIAL CO., LTD.) and were used for determining the water absorbency of the polymer in accordance with JIS K7209. The values of the water absorbency were obtained as a rate of increase in weight after 10 days from start of test, from the initial weight, by calculation using the following equation (i).

$$\text{Water absorbency after 10 days from start of the test} = (m_2 - m_1) \times 100/m_1 \quad \text{(i)}$$

$m_1$: initial weight (mg) of the sample fragment
$m_2$: weight (mg) of the sample fragment after 10 days from start of the test

The Izod impact strength of the polymer was determined in accordance with ASTM D-256.
The polycarbonate obtained in the production example 1 was used as the component A.
The component B selected from the following aromatic polyesters was used.
• Polyethylene naphthalate (PEN) manufactured by Teijin Fiber Ltd. (a polyethylene naphthalate resin having an intrinsic viscosity determined at 35 °C using an orthochlorophenol solvent of 0.607, having a glass transition point, a crystallization temperature and a melting point, determined using a differential scanning calorimeter after 10.3 mg of a sample thereof was heated to 290 °C at a heating rate of 10 °C/min of 109 °C, 228 °C and 268 °C, respectively, and having a glass transition point, a crystallization temperature and a melting point, determined after the sample was immediately quenched in the test tube placed into the ice bath such that the sample was not directly contacted to water when the temperature reached 290 °C, followed by heating at a heating rate of 10 °C/min, of 119 °C, 228 °C and 267 °C, respectively.)

- Polybutylene terephthalate (PBT), DURANEX (registered trade name) Grade 3300, manufactured by WinTech Polymer Ltd.

[Example 10]

50 parts by weight of the component A obtained in the production example 1 and 50 parts by weight of PEN (the component B) were mixed in the form of pellet, and were formed into samples using an injection molding machine. All of the properties of the obtained polycarbonate resin composition were determined. The results thereof are shown in Table 3.

[Example 11]

The same procedural and determination steps as in the example 10 were repeated, except that 50 parts of PBT was used as the component B. The results thereof are shown in Table 3.

[Example 12]

The same procedural and determination steps as in the example 10 were repeated, except that 95 parts by weight of the component A and 5 parts of PBT as the component B were used. The results thereof are shown in Table 3.

[Comparative Example 7]

The same procedural and determination steps as in the examples 10 and 11 were repeated only for the component A obtained in the production example 1. The results thereof are shown in Table 3.

Table 3

| | Component A (parts by weight) | Component B (parts by weight) | | Izod impact strength (J/m) | Water absorbency (wt%) | Plant-derived component content ratio (wt%) |
|---|---|---|---|---|---|---|
| | | PEN | PBT | | | |
| Example 10 | 50 | 50 | - | 25 | 1.0 | 42 |
| Example 11 | 50 | - | 50 | 44 | 1.2 | 42 |
| Example 12 | 95 | - | 5 | 20 | 1.8 | 80 |
| Comparative Example 7 | 100 | - | - | 17 | 3.0 | 84 |

IV. Examples corresponding to the inventions 8 and 9

Isosorbide manufactured by Rocket Corporation and diphenyl carbonate manufactured by Teijin Chemicals Ltd. were used in the examples. The specific viscosity of the polymer was obtained by determining the viscosity of a

solution comprising 0.7 g of the polycarbonate dissolved in 100 ml of a methylene chloride mixture solvent at 20 °C. In addition, the total content of Na, Fe and Ca in the polymer was estimated using the ICP emission analysis device VISTA MP-X (multi type) (Varian, Inc.). For evaluating the hue of the polymer, the Col-b value of the polymer was determined using the UV-VIS RECORDING SPECTROPHOTOMETER (manufactured by SHIMADZU CORPORATION), in accordance with JIS Z 8722. Molded products were prepared using an injection molding machine (PS 20, the PS-type injection molding machine, manufactured by NISSEI PLASTIC INDUSTRIAL CO., LTD.) at a cylinder temperature of 250 °C at a mold temperature of 80 °C, and the molded plates (disc-shaped samples having a thickness of 2 mm and a diameter of 35 mm) produced in the production step were used for determining the specific gravity and water absorbency of the polymer. The density of the polymer was determined by MD200S manufactured by MIRAGE. The water absorbency of the polymer was obtained as the rate of increase in weight after 10 days from start of the test, from the initial weight, by calculation using the following equation (a).

$$\text{Water absorbency after 10 days from start of the test} = (m_2 - m_1) \times 100/m_1 \quad (a)$$

$m_1$: initial weight (mg) of the sample fragment $m_2$: weight (mg) of the sample fragment after 10 days from start of the test

The melt viscosity of the polymer was determined by preparing samples by melt mixing the polymer at a mixing temperature of 250 °C at mixing rate of 30 rpm for 10 min using the laboplast mill (50C150, Toyo Seiki Seisakusho Ltd.), and comparing values, at a frequency of 100 rad/s, of the samples, determined by the dynamic measurement with a rheometer (ARES, manufactured by TA instruments Inc.) using a parallel plate having a plate diameter of 25 mm at a gap of about 600 μm at a measurement temperature of 250 °C.

The polycarbonate obtained in the production example 1 was used as the component A.

The component B selected from the following polymers was used.

- Polyethylene (PE) Hi-ZEX (registered trade name) 2200J, manufactured by Prime Polymer Co., Ltd.
- Polypropylene (PP) Prime Polypro (registered trade name) F109V, manufactured by Prime Polymer Co., Ltd.
- Polystyrene (PS) Polystyrol K-grade, manufactured by BASF
- Corporation

[Example 13]

30 parts by weight of the component A obtained in the production example 1 and 70 parts by weight of PE (the component B) were mixed in the form of pellet, and were formed into samples using the laboplast mill and an injection molding machine. All of the properties of the obtained polycarbonate resin composition were determined. The results thereof are shown in Table 4.

[Example 14]

The same procedural steps as in the example 13 were repeated, except that the ratio by weight of the component A obtained in the production example 1 to PE (the component B) was 50/50 (=the component A/the component B). The results thereof are shown in Table 4.

[Example 15]

The same procedural steps as in the example 13 were repeated, except that PP was used as the component B, and the ratio by weight of the component A obtained in the production example 1 to the component B was 50/50 (=the component A/the component B). The results thereof are shown in Table 4.

[Example 16]

The same procedural steps as in the example 13 were repeated, except that PS was used as the component B, and the ratio by weight of the component A obtained in the production example 1 to the component B was 50/50 (=the component A/the component B). The results thereof are shown in Table 4.

[Example 17]

• The same procedural steps as in the example 13 were repeated, except that the ratio by weight of the component A to PE (the component B) was 90/10 (=the component A/the component B). The results thereof are shown in Table 4.

[Example 18]

The same procedural steps as in the example 13 were repeated, except that PP was used as the component B, and the ratio by weight of the component A obtained in the production example 1 to the component B was 90/10 (=the component A/the component B). The results thereof are shown in Table 4.

[Example 19]

The same procedural steps as in the example 13 were repeated, except that PS was used as the component B, and the ratio by weight of the component A obtained in the production example 1 to the component B was 90/10 (=the component A/the component B). The results thereof are shown in Table 4.

[Comparative Example 8]

The same procedural steps as in the example 13 were repeated, except that only the component A obtained in the production example 1 was used. The results thereof are shown in Table 4.

Table 4

| | Component A (Parts by weight) | Component B (parts by weight) | | | Melt Viscosity (Pa·s) | Density ($g/cm^3$) | Water absorbency (wt%) | Plant-derived component content ratio (wt%) |
|---|---|---|---|---|---|---|---|---|
| | | PE | PP | PS | | | | |
| Example 13 | 30 | 70 | - | - | - | 1.05 | - | 25 |
| Example 14 | 50 | 50 | - | - | 380 | 1.11 | 0.40 | 42 |
| Example 15 | 50 | - | 50 | - | 150 | 1.13 | 0.60 | 42 |
| Example 16 | 50 | - | - | 50 | 230 | 1.18 | 1.7 | 42 |
| Example 17 | 90 | 10 | - | - | 660 | - | - | 76 |
| Example 18 | 90 | - | 10 | - | 390 | - | - | 76 |
| Example 19 | 90 | - | - | 10 | 470 | - | - | 76 |
| Comparative Example 8 | 100 | - | - | - | 740 | 1.45 | 3.0 | 84 |

IV. Examples corresponding to the inventions 10 and 11

Isosorbide manufactured by Rocket Corporation, diphenyl carbonate manufactured by Teijin Chemicals Ltd. and methylene chloride manufactured by Wako Pure Chemical Industries, Ltd. were used in the examples. The specific viscosity of the polymer was obtained by determining the viscosity of a solution comprising 0.7 g of the polycarbonate dissolved in 100 ml of a methylene chloride mixture solvent at 20 °C. In addition, the total content of Na, Fe and Ca in the polymer was estimated using the ICP emission analysis device VISTA MP-X (multi type) (Varian, Inc.). For evaluating hue of the polymer, the Col-b value of the polymer was determined using the UV-VIS RECORDING SPECTROPHOTOMETER (manufactured by SHIMADZU CORPORATION), in accordance with JIS Z 8722. The melt viscosity of the polymer was obtained by comparing the values, at a frequency of 100 rad/s, of samples, determined by the dynamic measurement with a rheometer (ARES, manufactured by TA instruments Inc.) using a parallel plate having a plate diameter of 25 mm at a gap of about 600 μm at a measurement temperature of 250 °C. The Izod impact strength of the polymer was determined, in accordance with ASTM D-256, using molded fragments having a thickness of 3 mm, a width of 12.5 mm and a length of 63 mm, prepared using an injection molding machine (PS20, the PS-type injection molding

machine, manufactured by NISSEI PLASTIC INDUSTRIAL CO., LTD.) at a cylinder temperature of 250 °C and at a mold temperature of 80 °C.

The polycarbonate obtained in the production example 1 was used as the component A.

The following high impact polystyrene was used as the component B.

- High impact polystyrene (HIPS) H9152, manufactured by PS Japan Corporation.

[Examples 20 and 21]

The component A obtained in the production example 1 and HIPS as the component B were mixed in the ratio by weight shown in Table 5 using the laboplast mill (50C150, Toyo Seiki Seisakusho Ltd.) at a mixing temperature of 250 °C at a mixing rate of 30 rpm for 10 min. After each resin was mixed in the form of a pellet, samples were prepared using an injection molding machine. The results of determination of every property of the obtained polycarbonate resin compositions are shown in Table 5.

[Comparative Example 9]

The same determination steps as in the examples 20 and 21 were repeated only for the component A obtained in the production example 1. The results thereof are shown in Table 5.

[Comparative Example 10]

The same procedural steps as in the examples 20 and 21 were repeated, except that 50 parts by weight of the component A obtained in the production example 1 and 50 parts by weight of a polyethylene naphthalate (PEN) resin (a polyethylene naphthalate resin having an intrinsic viscosity, determined at 35 °C using an orthochlorophenol solvent, of 0.607, having a glass transition point, a crystallization temperature and a melting point, determined using a differential scanning calorimeter after 10.0 mg of a sample thereof was heated to 290 °C at a heating rate of 10 °C/min of 109 °C, 228 °C and 268 °C, respectively, and having a glass transition point, a crystallization temperature and a melting point, determined after the sample was immediately quenched in the test tube placed into the ice bath such that the sample was not directly contacted to water when the temperature reached 300 °C, followed by heating at a heating rate of 10 °C/min, of 119 °C, 228 °C and 267 °C, respectively.) were used. The results thereof are shown in Table 5.

[Comparative Example 11]

The same procedural steps as in the examples 20 and 21 were repeated, except that 50 parts by weight of the component A obtained in the production example 1 and 50 parts by weight of a polystyrene (PS) resin (polystyrol K-grade, manufactured by BASF Corporation) were used. The results thereof are shown in Table 5.

Table 5

| | Component A (parts by weight) | Component B (parts by weight) | Izod impact strength [J/m] | Melt viscosity (Pa·s) | Plant-derived component content ratio (wt%) |
|---|---|---|---|---|---|
| Example 20 | 50 | HIPS 50 | 70 | 130 | 42 |
| Example 21 | 90 | HIPS 10 | 28 | 470 | 76 |
| Comparative Example 9 | 100 | - | 17 | 740 | 84 |
| Comparative Example 10 | 50 | PEN 50 | 25 | Abbrev. | 42 |
| Comparative Example 11 | 50 | PS 50 | Abbrev. | 230 | 42 |

Industrial Applicability

The polycarbonate resin composition of the present invention may be widely applied to a variety of use such as use in the optical media industry, the electric, electronic and office automation industries, the automobile and industrial machine industries, the medical industry and the security industry, and use as sheets, films, wrappings and miscellaneous goods and the like.

## Claims

**1.** A polycarbonate resin composition comprising 30 to 95 parts by weight of a polycarbonate (component A) represented by the following formula (1)

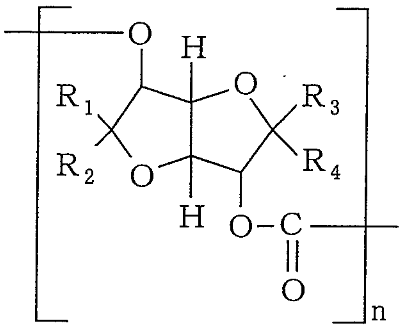

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of an acrylate resin (component B) which is a polymer of at least one ester of acrylic acid series represented by the following formula (2)

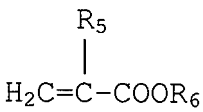

(2)

(in which $R_5$ represents a hydrogen atom or a methyl group, and $R_6$ represents an alkyl group having 1 to 18 carbon atoms) and has a ratio of the residues of the ester of acrylic acid series in the structural unit of 50 mol% or more (provided that the total of the component A and the component B is 100 parts by weight).

**2.** The polycarbonate resin composition according to claim 1, wherein the ester of acrylic acid series is methyl methacrylate.

**3.** A polycarbonate resin composition comprising 30 to 95 parts by weight of a polycarbonate (component A) represented by the following formula (1)

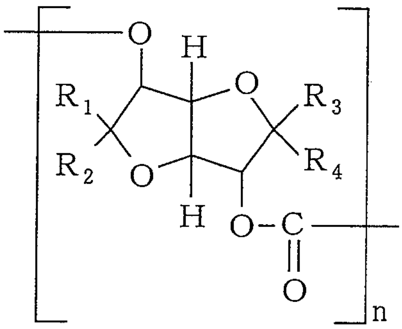

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a biodegradable resin (component B) (provided that the total of the component A and the component B is 100 parts by weight).

**4.** The resin composition according to claim 3, wherein the biodegradable resin is a biodegradable polyester resin.

**5.** The resin composition according to claim 4, wherein the biodegradable polyester resin is selected from the group consisting of poly-3-hydroxybutylate, polycaprolactone and polybutylene succinate.

**6.** A polycarbonate resin composition comprising 30 to 95 parts by weight of a polycarbonate (component A) represented by the following formula (1)

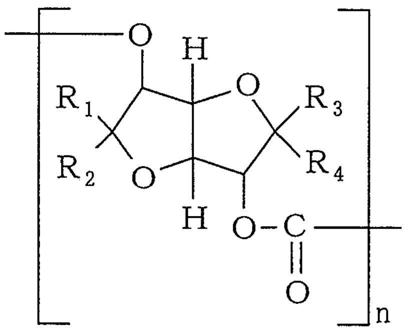

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of an aromatic polyester (component B) (provided that the total of the component A and the component B is 100 parts by weight).

**7.** The polycarbonate resin composition according to claim 6, wherein the aromatic polyester is polyethylene naphthalate, polybutylene terephthalate or a combination thereof.

**8.** A polycarbonate resin composition comprising 30 to 95 parts by weight of a polycarbonate (component A) represented by the following formula (1)

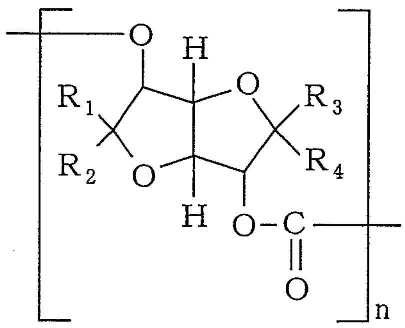

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a polyolefin (component B) (provided that the total of the component A and the component B is 100 parts by weight).

**9.** The resin composition according to claim 8, wherein the polyolefin is polyethylene, polypropylene, polystyrene or an optional combination thereof.

**10.** A polycarbonate resin composition comprising 30 to 95 parts by weight of a polycarbonate (component A) represented by the following formula (1)

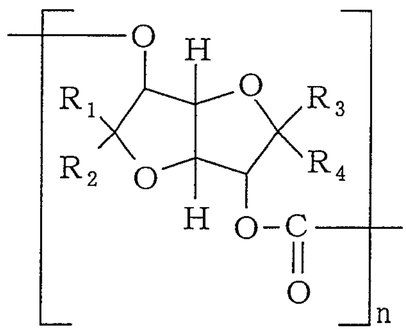

(1)

(in which $R_1$ to $R_4$ each independently represents a group selected from a hydrogen atom, an alkyl group, a cycloalkyl group or an aryl group; and n represents an integer of from 10 to 10000 as the number of the repeating units), and 5 to 70 parts by weight of a rubber-modified styrene resin (component B) (provided that the total of the component A and the component B is 100 parts by weight).

**11.** The resin composition according to claim 10, wherein the rubber-modified styrene resin is a high impact polystyrene.

**INTERNATIONAL SEARCH REPORT**

International application No.
PCT/JP2008/060626

A. CLASSIFICATION OF SUBJECT MATTER

*C08L69/00*(2006.01)i, *C08G64/02*(2006.01)i, *C08L23/00*(2006.01)i, *C08L25/10*(2006.01)i, *C08L33/04*(2006.01)i, *C08L67/04*(2006.01)i, *C08L101/16*(2006.01)i

According to International Patent Classification (IPC) or to both national classification and IPC

B. FIELDS SEARCHED

Minimum documentation searched (classification system followed by classification symbols)
C08L69/00, C08G64/02, C08L23/00, C08L25/10, C08L33/04, C08L67/04, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| P,A | WO 2008/026744 A1 (Teijin Ltd.), 06 March, 2008 (06.03.08), Claims (Family: none) | 1-11 |
| X | WO 2007/013463 A1 (Ube Industries, Ltd.), 01 February, 2007 (01.02.07), Claims; Par. No. [0033] (Family: none) | 1-11 |
| A | JP 2007-070438 A (Teijin Ltd.), 22 March, 2007 (22.03.07), Claims (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 September, 2008 (22.09.08) | 07 October, 2008 (07.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/060626

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-070391 A (Teijin Ltd.), 22 March, 2007 (22.03.07), Claims (Family: none) | 1-11 |

Form PCT/ISA/210 (continuation of second sheet) (April 2007)

**INTERNATIONAL SEARCH REPORT**

International application No.
PCT/JP2008/060626

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The technical feature common to the inventions of claims 1-11 is a polycarbonate represented by the formula (1). The international search, however, has revealed that the polycarbonate represented by the formula (1) and a resin composition obtained by blending the polycarbonate with another polymer are not novel since they are disclosed in document WO 2007/013463 A1 (Ube Industries, Ltd.). Consequently, the polycarbonate represented by the formula (1) is not a special technical feature within the meaning of PCT Rule 13.2, second sentence. There is therefore no technical feature common to all the inventions of claims 1-11.

(Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.: 1, 2

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

INTERNATIONAL SEARCH REPORT

International application No.
PCT/JP2008/060626

Continuation of Box No.III of continuation of first sheet(2)

Since there is no other common feature which can be considered as a special technical feature within the meaning of PCT Rule 13.2, second sentence, no technical relationship within the meaning of PCT Rule 13 can be seen between those different inventions. It is therefore obvious that the inventions of claims 1-11 do not satisfy the requirement of unity of invention.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003292603 A
- WO 2007013463 A
- US 2005143554 A
- GB 1079686 A